# EUROPEAN PATENT APPLICATION

(11) **EP 4 715 592 A1**
(43) Date of publication of application: **25.03.2026**
(21) Application number: 24822377.8
(22) Date of filing: 15.04.2024
(51) Int. Cl.: G06F 9/50

(54) **POD DEPLOYMENT METHOD, ELECTRONIC DEVICE, AND STORAGE MEDIUM**

(30) Priority: 13.06.2023 CN 202310699482
(71) Applicant: ZTE CORPORATION, Shenzhen, Guangdong 518057 (CN)
(72) Inventor: YANG, Song, Shenzhen, Guangdong 518057 (CN)
(74) Representative: Canzler & Bergmeier Patentanwälte Partnerschaft mbB
(86) International application number: PCT/CN2024/087790
(87) International publication number: WO 2024/255422

(57) **Abstract**

The present application provides a pod deployment method, an electronic device, and a storage medium. The method comprises: acquiring label information of pods to be processed in a Kubernetes platform; respectively determining scheduling priorities of said pods on the basis of the label information of said pods; and scheduling said pods according to the scheduling priorities of said pods.

## Description

### CROSS-REFERENCE TO RELATED APPLICATIONS

This application claims priority to the patent application No. 202310699482.3 filed with the CNIPA on June 13, 2023, which is incorporated by reference hereby in its entirety.

### TECHNICAL FIELD

The present application relates to, but is not limited to, the technical field of cloud computing.

### BACKGROUND

Kubernetes (K8s for short) is configured to manage containerized applications across multiple hosts in a cloud platform. The goal of Kubernetes is to enable simple and efficient deployment of containerized applications. A pod is the smallest unit created or deployed by Kubernetes, and Kubernetes can deploy multiple pods in a Kubernetes platform based on a unified scheduling rule.

However, in the process of deployment, since the dequeuing sequence of pods is random to some extent, situations such as pod restart or pod recreation may occur, resulting in a reduced deployment efficiency.

### SUMMARY

The present application provides a pod deployment method, an electronic device, and a storage medium.

An embodiment of the present application provides a pod deployment method, including: acquiring label information of pods to be processed in a Kubernetes platform; determining scheduling priorities of the pods to be processed respectively based on the label information of the pods to be processed; and scheduling the pods to be processed based on the scheduling priorities of the pods to be processed.

An embodiment of the present application provides an electronic device, including: one or more processors; and a storage having one or more programs stored thereon which, when executed by the one or more processors, cause the one or more processors to implement any pod deployment method described in the embodiments of the present application.

An embodiment of the present application provides a readable storage medium having a computer program stored thereon which, when executed by a processor, causes any pod deployment method described in the embodiments of the present application to be implemented.

### BRIEF DESCRIPTION OF DRAWINGS

FIG. 1 shows a schematic flowchart of a pod deployment method in a Kubernetes platform in the existing art.
FIG. 2 shows a schematic flowchart of a health check method for a Kubernetes platform in the existing art.
FIG. 3 shows a schematic flowchart of a pod deployment method according to an embodiment of the present application.
FIG. 4 shows a schematic diagram of pod scheduling according to an embodiment of the present application.
FIG. 5 shows a schematic diagram of a configuration file according to an embodiment of the present application.
FIG. 6 shows a schematic flowchart of a pod deployment method according to an embodiment of the present application.
FIG. 7 shows a block diagram of components in a pod deployment apparatus according to an embodiment of the present application.
FIG. 8 shows a block diagram of exemplary hardware architecture of a computing device capable of implementing a pod deployment method and apparatus according to an embodiment of the present application.

### DETAIL DESCRIPTION OF EMBODIMENTS

For clarity and better understanding of the objects, technical solution and advantages of the application, embodiments of the present application will now be described in detail in conjunction with the accompanying drawings. It should be noted that the embodiments of the present application and features therein may be combined with each other in any manner as long as they are not contradictory.

Current applications of Kubernetes in the communication field typically implement flexible deployment of communication services based on a Kubernetes platform, so as to implement control of network element devices and promotion of service traffic.

However, in the process of deploying pods to various network element devices in the Kubernetes platform, the Kubernetes platform generally deploys the pods according to a unified scheduling rule. For example, the pods are deployed according to a unified scheduling rule based on one or more yaml files (i.e., files indicating a format of data serialization).

A plurality of pods are scheduled to a certain node for deployment in a serial order, and since the deployment sequence of the pods is random to some extent, situations such as pod restart or pod recreation may occur, resulting in a reduced deployment efficiency.

For example, a network element device includes pod-A, pod-B and pod-C. In the deployment process, pod-B is scheduled first. However, since the pod-A as a foundation pod has not been scheduled and thus cannot provide services for pod-B, pod-B cannot enter a ready state. Then, pod-B may choose to be restarted or recreated to return to the scheduling queue, which wasting the first scheduling of pod-B and does not have any effect at all. Further, only when the dequeuing sequence of the scheduling queue is pod-A first, pod-B second and pod-C last, the three pods can enter the ready state one after the other. As can be seen from the above example, due to the randomness of different deployment sequences of pods, the deployment efficiency is reduced.

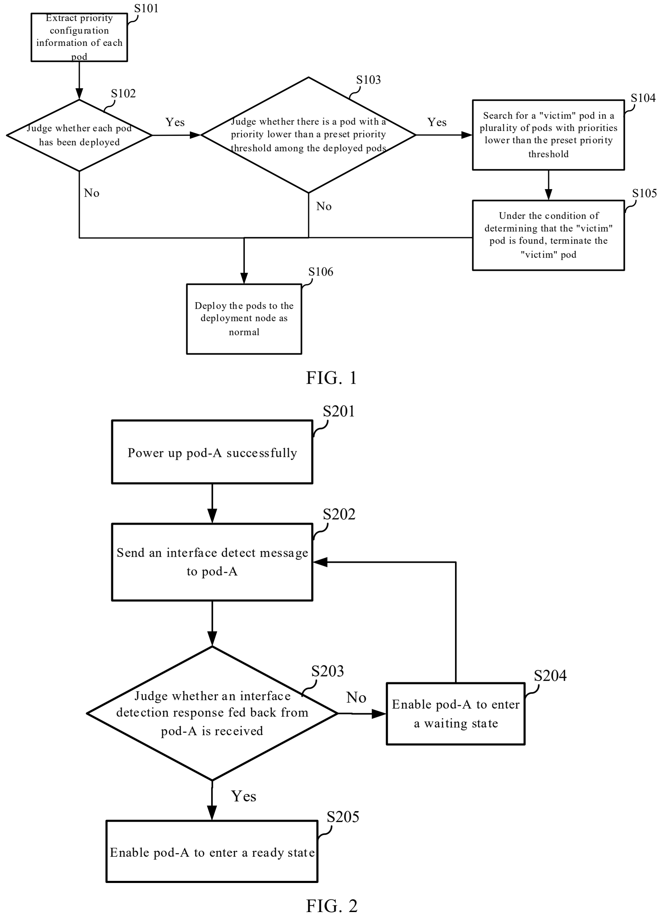

To solve the above problem, two processing modes as shown in FIGs. 1 and 2 have been proposed in the existing art.

FIG. 1 shows a schematic flowchart of a pod deployment method in a Kubernetes platform in the existing art. As shown in FIG. 1, the pod deployment method in the Kubernetes platform includes the following operations S101 to S106.

Operation S101 includes extracting priority configuration information of each pod.

Operation S102 includes judging whether each pod has been deployed.

Under the condition of determining that all pods have been deployed to a deployment node, operation S103 is performed; and under the condition of determining that not all pods have been deployed to the deployment node, operation S106 is performed.

Operation S103 includes judging whether there is a pod with a priority lower than a preset priority threshold among the deployed pods.

Under the condition of determining that there is a pod with a priority lower than the preset priority threshold among the deployed pods, operation S104 is performed; otherwise, operation S106 is performed.

Operation S104 includes searching for a "victim" pod in a plurality of pods with priorities lower than the preset priority threshold.

Operation S105 includes under the condition of determining that the "victim" pod is found, terminating the "victim" pod.

Operation S106 includes deploying the pods to the deployment node as normal.

The above process is based on a preemption mode where the "victim" pod with a lower priority than the preset priority threshold among the plurality of pods is terminated, so that other pods with higher priorities can be properly deployed to the deployment node. However, the process of searching for the "victim" pod is still time-consuming, thereby reducing the deployment efficiency of pods.

FIG. 2 shows a schematic flowchart of a health check method for a Kubernetes platform in the existing art. The health check method may be applied to pod-B. As shown in FIG. 2, the health check method for the Kubernetes platform includes the following operations S201 to S205.

Operation S201 includes powering up pod-A successfully.

Operation S202 includes sending an interface detect message to pod-A.

Operation S203 includes judging whether an interface detection response fed back from pod-A is received.

Under the condition of determining that the interface detection response fed back from pod-A is received, operation S205 is performed; and under the condition of determining that the interface detection response fed back from pod-A is not received, operation S204 is performed.

Operation S204 includes enabling pod-A to enter a waiting state.

At this time, instead of being restarted or recreated, pod-B waits for a period of time and then returns to operation S202, i.e., sends an interface detection message to pod-A, until pod-A replies with an interface detection response.

Operation S205 includes enabling pod-A to enter a ready state.

The pod in the ready state indicates that the pod can work properly, i.e., the pod passes the health check.

It should be noted that the health check is a way to facilitate decoupling between pods. Although the restart or recreation of pod-B can be avoided by adopting the health check mode, there is still a problem of time waste while sending the interface detection message to pod-A in a polling manner. Moreover, if the dependency relationship between subsequent pods changes, the logical order of the health check should also be adjusted correspondingly, which also has the problem of low deployment efficiency.

The present application provides a pod deployment method, an electronic device, and a storage medium, which can solve the above problems.

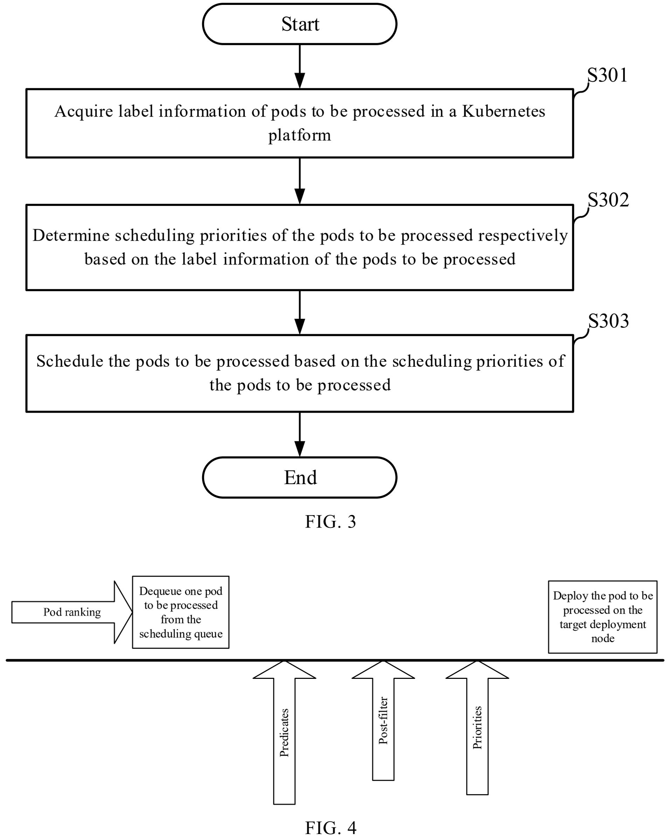

FIG. 3 shows a schematic flowchart of a pod deployment method according to an embodiment of the present application. This method may be applied to a pod deployment apparatus, for example, a pod deployment apparatus provided in a server corresponding to the Kubernetes platform. As shown in FIG. 3, the pod deployment method in the embodiment of the present application includes, but is not limited to, the following operations S301 to S303.

Operation S301 includes acquiring label information of pods to be processed in a Kubernetes platform.

The label information is related to a pod class, and a pod is the smallest resource object in the Kubernetes platform. For example, a pod to be processed may be a set of one application container, or a set of multiple application containers. The pod to be processed includes at least one of a shared storage (e.g., a storage volume, etc.), a network address, or operation information corresponding to the pod to be processed (e.g., container image version information or information on port to be used, etc.).

When the application containers are tightly coupled and all require resources such as a shared disk, a plurality of application containers are configured as one pod to be processed.

Operation S302 includes determining scheduling priorities of the pods to be processed respectively based on the label information of the pods to be processed.

Operation S303 includes scheduling the pods to be processed based on the scheduling priorities of the pods to be processed.

In this embodiment, by acquiring the label information of pods to be processed in the Kubernetes platform, classes of the pods to be processed can be distinguished based on the label information; and by determining scheduling priorities of the pods to be processed respectively based on the acquired label information of the pods to be processed, the scheduling priority of each pod to be processed can reflect the execution order of the pod to be processed, so that the pods to be processed can be processed in sequence conveniently, and randomness of the pod dequeuing sequence is reduced, where the pod to be processed is the smallest resource object in the Kubernetes platform. Further, by scheduling the pods to be processed based on the scheduling priorities of the pods to be processed, pods with higher scheduling priorities are executed preferentially, so that pod restart or recreation conditions caused by the randomness of the pod dequeuing sequence is reduced, and the deployment efficiency of the pods to be processed is improved.

In some exemplary embodiments, the label information of each pod to be processed includes a preset number, where a smaller preset number of the pod to be processed corresponds to a higher scheduling priority of the pod to be processed.

It should be noted that, based on the preset number, the scheduling priority corresponding to each pod to be processed can be quickly and accurately determined, which can accelerate the processing speed of the pods to be processed, and improve the deployment efficiency of the pods to be processed.

In some exemplary embodiments, the label information of each pod to be processed is information determined based on custom configuration information. The operation S302 of determining scheduling priorities of the pods to be processed respectively based on the label information of the pods to be processed includes: determining scheduling priorities of the pods to be processed respectively based on classes of the pods to be processed.

The label information is related to a pod class, and different classes of pods to be processed correspond to different scheduling priorities.

Based on a correspondence relationship between the class of a pod to be processed and the corresponding label information configured in the custom configuration information, the scheduling priority corresponding to each pod to be processed can be quickly found, thereby accelerating the determination speed of the scheduling priority of each pod to be processed, and ensuring the pods to be processed with higher scheduling priorities to be processed preferentially.

In some exemplary embodiments, the classes of the pods to be processed include: a foundation class, a business class, and a super class; where a foundation class pod has a higher scheduling priority than a business class pod, and a business class pod has a higher scheduling priority than a super class pod.

The foundation class pod is configured to provide a foundation framework capability. For example, the foundation class pod includes at least one of a pod that exclusively provides a file service capability, a pod that provides a network communication support capability, or a pod that provides a persistent storage capability.

The business class pod is configured to implement basic services of a network element device based on the foundation framework capability. The business class pod corresponds to the network element service supported by the pod, and different business class pods support different network element services.

The super class pod is configured to directly serve a user, and performs secondary processing (e.g., data classification, data extraction, data re-aggregation, etc.) on service data of a network element device, to obtain data required by the user and present the data required by the user at a user side. Also, the super class pod may vary as the user requirements.

It should be noted that there is a certain dependency relationship among the foundation class pod, the business class pod, and the super class pod. For example, almost all pods require the foundation framework capability provided by the foundation class pod to facilitate business process support for other classes of pods; and the super class pod often depends on service data provided by the business class pod.

The above classes of pods to be processed are merely illustrative, and different classes of pods may be present in different network element devices. For example, the pods may be divided into different classes based on the resource sizes occupied by the pods, or divided into different classes based on the application scenarios, and so on. Other pod classes not illustrated herein are also within the protection scope of the present application, and are not described in detail here.

In some exemplary embodiments, before determining scheduling priorities of the pods to be processed respectively based on classes of the pods to be processed, the method further includes: acquiring the custom configuration information; and under the condition of determining that the custom configuration information does not contain a class of a pod to be processed, setting the class of the pod to be processed to the foundation class.

It should be noted that, if a class of a pod to be processed cannot be found in the custom configuration information, the class of the pod to be processed is set to foundation (i.e., a class with the highest scheduling priority), so that the pod to be processed is processed preferentially.

In some exemplary embodiments, before determining scheduling priorities of the pods to be processed respectively based on the label information of the pods to be processed in operation S302, the method further includes: acquiring, in response to a deployment request instruction, deployment requirement information in the deployment request instruction; and screening, according to the deployment requirement information, pods to be processed from the Kubernetes platform to obtain a plurality of pods to be processed, and acquiring the label information of the plurality of pods to be processed.

The deployment requirement information may include information related to a cloud-native network function (CNF) requested to be deployed by a user terminal. Different network element devices correspond to different deployment requirement information. For example, the deployment requirement information corresponding to a scheduling requirement of a base station for a terminal is service scheduling information for each terminal, and the deployment requirement information corresponding to a configuration requirement of a core network device for each network element device is configuration information of the core network device for each network element device, and the like.

Based different deployment requirement information, a plurality of pods to be processed related to the deployment requirement information, which are to be obtained in the Kubernetes platform, are determined. Further, the pods to be processed in the Kubernetes platform are screened to obtain the plurality of pods to be processed, and label information thereof is also obtained, so that the obtained pods to be processed can meet different deployment requirement information, and the deployment accuracy can be improved.

In some exemplary embodiments, scheduling the pods to be processed based on the scheduling priorities of the pods to be processed in operation S303 may be implemented by: based on the scheduling priorities of the pods to be processed, inserting each pod to be processed into a tail of a queue; and repeatedly extracting a pod to be processed from a head of the queue, and deploying the pod to be processed on a target deployment node until there is no pod to be processed in the queue.

A higher scheduling priority of the pod to be processed indicates a closer position of the pod to be processed to the head of the queue. The queue is a first-in-first-out queue.

For example, FIG. 4 shows a schematic diagram of pod scheduling according to an embodiment of the present application. As shown in FIG. 4, after a plurality of pods are ranked based on the scheduling priorities of the pods to be processed, the plurality of pods to be processed are sequentially placed into a scheduling queue. Then, one pod to be processed is dequeued from the scheduling queue, and processed by algorithms including Predicates, Post-filter and Priorities in sequence, to obtain a target deployment node. Finally, the pod to be processed is deployed on the target deployment node.

The Predicates algorithm stage is a node preselection process, in which nodes failing to satisfy certain conditions are filtered out. Therefore, this stage may also be referred to as a node filtering stage. For example, in a resource invitation process, the pod is required to not only meet the service requirement, but also use a node with sufficient resources for deployment. Therefore, a node with insufficient resources should be filtered out. The Post-filter algorithm stage is configured to preempt a node with more occupied resources, so as to acquire a node with strong resource capability to the maximum extent. The Priorities algorithm stage is a node optimization stage, in which a plurality of nodes are ranked based on their priorities, and a node with the highest priority is selected as the target deployment node.

By preferentially inserting the pod to be processed with the highest scheduling priority to the tail of the scheduling queue, the pod to be processed with the highest scheduling priority can be preferentially extracted from the head of the scheduling queue, so that the pods to be processed with higher scheduling priorities can be processed preferentially, randomness of the dequeuing sequence of pods to be processed is reduced, and thus pod restart or recreation conditions caused by the randomness of the pod dequeuing sequence is reduced. Further, the pod to be processed is deployed on the target deployment node until there is no pod to be processed in the queue, which improves the deployment efficiency of the pods to be processed.

In some exemplary embodiments, before deploying the pod to be processed on the target deployment node, the method further includes: stopping the processing of the pods to be processed under the condition of determining that the target deployment node is unable to be acquired.

Since the target deployment node is unable to be acquired, the pod to be processed cannot be deployed on the corresponding node in time, and thus, it is impossible to complete the task which is expected to be completed by the pod to be processed. Therefore, the processing of the pods to be processed should be stopped to reduce a deployment failure ratio of the pods to be processed.

Further, the target deployment node may be determined through a variety of different screening modes, so that the pods to be processed can be further processed. For example, the target deployment node may be acquired by: performing preliminary screening on a plurality of candidate deployment nodes based on resource capability information of each candidate deployment node, to obtain a preliminary screening result; and screening a plurality of candidate deployment nodes in the preliminary screening result again based on service capability information of each candidate deployment node, to obtain the target deployment node.

The resource capability information represents information about a resource processing capability of the candidate deployment node, and the plurality of candidate deployment nodes in the preliminary screening result are nodes with resource capabilities meeting a first preset capability threshold (for example, with a number of resources greater than a preset resource number threshold, and the like). The process of performing preliminary screening on the plurality of candidate deployment nodes based on the resource capability information may correspond to the Predicates algorithm stage shown in FIG. 4.

The service capability information represents information about a capability of the candidate deployment node for executing a service requirement of the pod to be processed. The process of screening the plurality of candidate deployment nodes in the preliminary screening result again based on the service capability information may correspond to the Priorities algorithm stage shown in FIG. 4.

By screening the plurality of candidate deployment nodes in the preliminary screening result again based on service capability information of each candidate deployment node, for example, by ranking the plurality of candidate deployment nodes based on the service capability information, candidate deployment nodes with higher priorities are ranked higher, so that a candidate deployment node with highest priority can be selected as the target deployment node. By deploying the pod to be processed on the target deployment node, the pod to be processed can obtain the resource capability information and the service capability information of the target deployment node, so that the corresponding service functions can be better performed, and the processing efficiency of services can be improved.

In some exemplary embodiments, screening the plurality of candidate deployment nodes in the preliminary screening result again based on service capability information of each candidate deployment node to obtain the target deployment node includes: based on the service capability information of each candidate deployment node, determining a service processing capability score corresponding to each candidate deployment node in the preliminary screening result; and selecting a candidate deployment node with the highest service processing capability score from the plurality of candidate deployment nodes in the preliminary screening result as the target deployment node.

In some exemplary embodiments, after performing preliminary screening on the plurality of candidate deployment nodes based on resource capability information of each candidate deployment node to obtain the preliminary screening result, and before screening the plurality of candidate deployment nodes in the preliminary screening result again based on service capability information of each candidate deployment node to obtain the target deployment node, the method further includes: under the condition of determining that the resource capability information of the plurality of candidate deployment nodes in the preliminary screening result is not matched with the processing resources required by the pod to be processed, preempting a candidate deployment node having a resource capability meeting a second preset capability threshold from the plurality of candidate deployment nodes, to obtain the preliminary screening result.

The second preset capability threshold is greater than the first preset capability threshold. The process of preempting the candidate deployment node having a resource capability meeting the second preset capability threshold from the plurality of candidate deployment nodes to obtain the preliminary screening result may correspond to the Post-filter algorithm stage shown in FIG. 4.

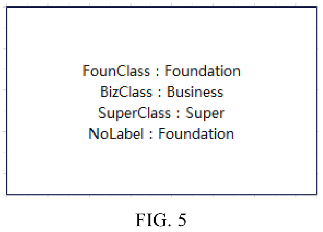

FIG. 5 shows a schematic diagram of a configuration file according to an embodiment of the present application. As shown in FIG. 5, the configuration file is presented in a regular custom file form.

The label information corresponding to a foundation class pod is class: foundation, the label information corresponding to a business class pod is class: business, and the label information corresponding to a super class pod is class: super. The label information may be information determined based on a classifier.

In the configuration file, FounClass represents a foundation pod corresponding to a label type of Foundation (i.e., foundation class); BizClass represents a business pod corresponding to a label type of Business (i.e., business class); SuperClass represents a super pod (or upper layer pod) corresponding to a label type of Super (i.e., super class or application class); and NoLabel represents a non-labeled pod also corresponding to a label type of Foundation (i.e., foundation class).

It should be noted that a parallel deployment mode may be adopted for deployment of the pods.

In some exemplary embodiments, the plurality of pods to be processed may be deployed in batches on different nodes, which can maximally reduce the occurrence ratio of pod restart or pod recreation when the dependency relationship between the pods to be processed cannot be satisfied in the deployment process, and improve the deployment efficiency of the pods to be processed.

Under the condition that the dependency relationship between the pods to be processed is changed subsequently, the different scheduling orders of pods to be processed can be adjusted simply by adjusting the label information of each pod to be processed, thereby improving the scheduling efficiency of the pods to be processed.

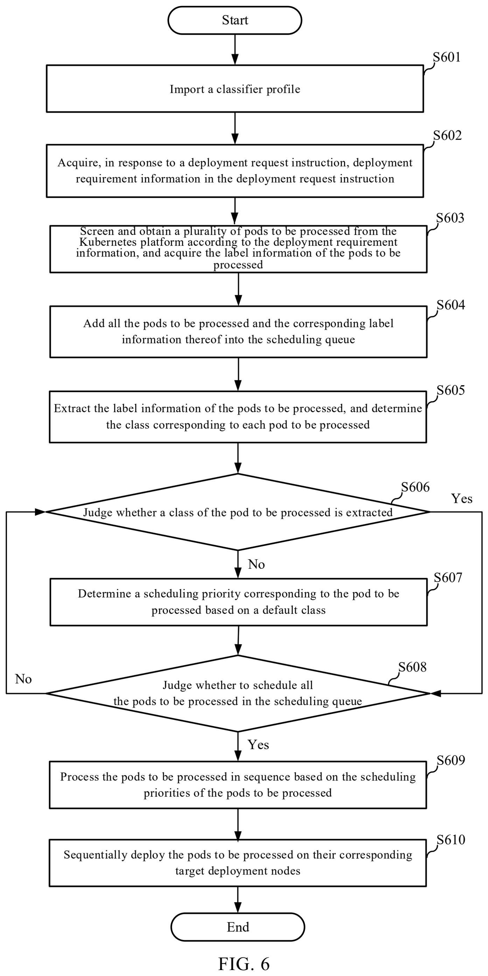

FIG. 6 shows a schematic flowchart of a pod deployment method according to an embodiment of the present application. As shown in FIG. 6, the pod deployment method in the embodiment of the present application includes, but is not limited to, the following operations S601 to S610.

Operation S601 includes importing a classifier configuration file.

The classifier configuration file may be a configuration file as shown in FIG. 5, where the label information corresponding to different types of pods are preset, so that when the deployment requirement information is subsequently acquired, it can be compared with the configuration file to determine the label information corresponding to each pod to be processed.

In some optional embodiments, the classifier configuration file may be a user-defined configuration file including user-defined label information, class information corresponding to the label information, and the like.

It should be noted that the configuration file may be a file presented in a regular file form, or may also be a binary file, a file presented in a code script form, or the like, which is not limited in the present application as long as it is in a file format that can be identified by the Kubernetes platform.

Operation S602 includes acquiring, in response to a deployment request instruction, deployment requirement information in the deployment request instruction.

The deployment request instruction includes: deployment requirement information related to CNF requested to be deployed by a user terminal. CNF is not only a containerized network and virtual machine, but also can divide network functions into a plurality of different service modules, so that different service functions can be implemented by different service modules.

Operation S603 includes screening, according to the deployment requirement information, pods to be processed from the Kubernetes platform to obtain a plurality of pods to be processed, and acquiring the label information of the plurality of pods to be processed.

The pod to be processed may be a set of one application container, or a set of multiple application containers. The pod to be processed includes a shared storage (e.g., a storage volume, etc.), a network address, operation information corresponding to the pod to be processed (e.g., container image version information or information on port to be used, etc.), or the like.

Only when the application containers are tightly coupled and all require resources such as a shared disk, a plurality of application containers are configured as one pod to be processed.

In some exemplary embodiments, operation S601 may be omitted, so that instead of importing a classifier configuration file, each pod to be processed is classified by a fixed logic. For example, the classification is performed with Arabic numerals, with 1 fixedly corresponding to the highest priority, then 2, so on and so forth; or the classification is performed with English letters, with *a* fixedly corresponding to the highest priority, then b, so on and so forth. In this manner, the label information corresponding to each pod to be processed is determined.

The label information of each pod to be processed includes: an Arabic numeral representing the class information, or an English letter representing the class information, or the like, so that the scheduling priority of each pod to be processed can be confirmed subsequently based on the label information of each pod to be processed.

Operation S604 includes adding all the pods to be processed and the corresponding label information thereof into the scheduling queue.

Operation S605 includes extracting the label information of the pods to be processed, and determining the class corresponding to each pod to be processed.

When the label information of the pod to be processed is extracted from the scheduling queue, it is required to check a head of the scheduling queue first, and repeatedly extract the pod to be processed at the head of the scheduling queue to obtain the label information of the pod to be processed, based on which the class corresponding to the pod to be processed is determined.

In some exemplary embodiments, the label information of the pod to be processed may be identified by a classifier to determine the class corresponding to the pod to be processed.

It should be noted that a core function of the classifier is to identify preset label information, classify each pod to be processed according to the label information, and determine a class of each pod to be processed, where different classes of pods to be processed correspond to different scheduling priorities.

Operation S606 includes judging whether a class of the pod to be processed is extracted.

Under the condition of determining that a class of the pod to be processed is extracted, operation S608 is performed; and under the condition of determining that no class of the pod to be processed is extracted, operation S607 is performed.

Operation S607 includes determining a scheduling priority corresponding to the pod to be processed based on a default class.

The default class may be foundation class, and by processing the scheduling priority corresponding to the pod to be processed as the scheduling priority corresponding to the foundation class, the pod to be processed can be processed preferentially.

Operation S608 includes judging whether to schedule all the pods to be processed in the scheduling queue.

Under the condition of determining to schedule all the pods to be processed in the scheduling queue, operation S609 is performed; and under the condition of determining that there is still a pod to be processed not scheduled in the scheduling queue, the process may return to operation S606.

Operation S609 includes processing the pods to be processed in sequence based on the scheduling priorities of the pods to be processed.

Operation S610 includes sequentially deploying the pods to be processed on their corresponding target deployment nodes.

The target deployment node may be acquired by: performing preliminary screening on a plurality of candidate deployment nodes based on resource capability information of each candidate deployment node, to obtain a preliminary screening result; and screening a plurality of candidate deployment nodes in the preliminary screening result again based on service capability information of each candidate deployment node, to obtain a target deployment node. Then, the pod to be processed is deployed on the target deployment node.

The resource capability information represents information about a resource processing capability of the candidate deployment node, and the plurality of candidate deployment nodes in the preliminary screening result are nodes with resource capabilities meeting a first preset capability threshold (for example, with a number of resources greater than a preset resource number threshold, and the like). The process of performing preliminary screening on the plurality of candidate deployment nodes based on the resource capability information may correspond to the Predicates algorithm stage shown in FIG. 4.

The service capability information represents information about a capability of the candidate deployment node for executing a service requirement of the pod to be processed. The process of screening the plurality of candidate deployment nodes in the preliminary screening result again based on the service capability information may correspond to the Priorities algorithm stage shown in FIG. 4.

In some exemplary embodiments, the processing of the pods to be processed is stopped under the condition of determining that the target deployment node is unable to be acquired. Then, the scheduling of other pods to be processed in the scheduling queue is stopped, and the deployment corresponding to the pod to be processed is terminated.

In some exemplary embodiments, if all the pods to be processed have acquired their corresponding target deployment nodes, and are successfully deployed on their corresponding target deployment nodes, the deployment is determined to be completed.

In this embodiment, by receiving a deployment request instruction and acquiring deployment requirement information in the deployment request instruction, and screening and obtaining a plurality of pods to be processed from the Kubernetes platform according to the deployment requirement information, and acquiring the label information of the pods to be processed, classes of the pods to be processed can be distinguished based on the label information; and by determining scheduling priorities of the pods to be processed respectively based on the acquired label information of the pods to be processed, the scheduling priority of each pod to be processed can reflect the execution order of the pod to be processed, so that the pods to be processed can be processed in sequence conveniently, and randomness of the pod dequeuing sequence is reduced. Further, by scheduling the pods to be processed based on the scheduling priorities of the pods to be processed, pods with higher scheduling priorities are executed preferentially, so that pod restart or recreation conditions caused by the randomness of the pod dequeuing sequence is reduced, and then, by deploying each pod to be processed on the target deployment node, the deployment efficiency of the pods to be processed is improved.

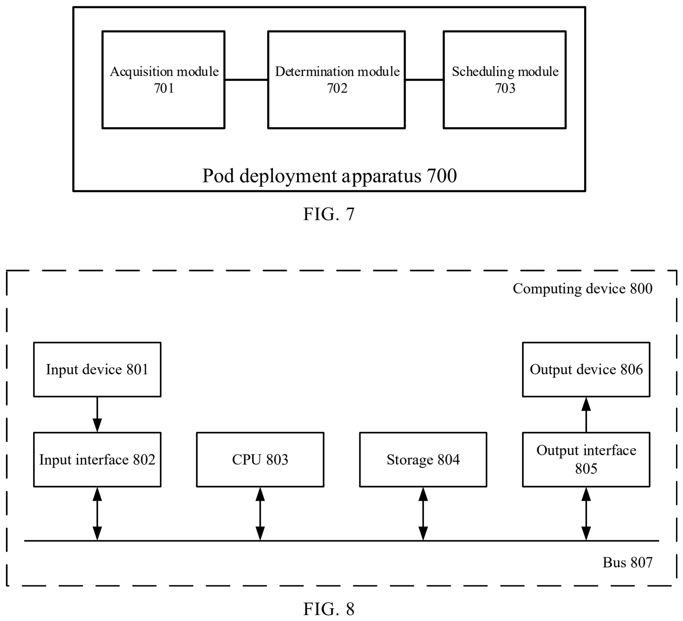

FIG. 7 shows a block diagram of components in a pod deployment apparatus according to an embodiment of the present application. As shown in FIG. 7, the pod deployment apparatus 700 includes, but is not limited to: an acquisition module 701 configured to acquire label information of pods to be processed in a Kubernetes platform; a determination module 702 configured to determine scheduling priorities of the pods to be processed respectively based on the label information of the pods to be processed; and a scheduling module 703 configured to schedule the pods to be processed based on the scheduling priorities of the pods to be processed.

It should be noted that the pod deployment apparatus 700 in this embodiment can implement any pod deployment method in the embodiments of the present application.

According to the pod deployment apparatus in the embodiments of the present application, the acquisition module acquires the label information of pods to be processed in the Kubernetes platform, so that classes of the pods to be processed can be distinguished based on the label information; and the determination module determines scheduling priorities of the pods to be processed respectively based on the acquired label information of the pods to be processed, so that the scheduling priority of each pod to be processed can reflect the execution order of the pod to be processed, the pods to be processed can be processed in sequence conveniently, and randomness of the pod dequeuing sequence is reduced, where the pod to be processed is the smallest resource object in the Kubernetes platform. Further, the determination module schedules the pods to be processed based on the scheduling priorities of the pods to be processed, so that pods with higher scheduling priorities are executed preferentially, pod restart or recreation conditions caused by the randomness of the pod dequeuing sequence is reduced, and the deployment efficiency of the pods to be processed is improved.

It should be noted that the present disclosure is not limited to the specific configurations and processing described in the above embodiments and shown in the figures. For convenience and simplicity of description, detailed description of a known method is omitted here, and for the specific working processes of the system, the modules and the units described above, reference may be made to corresponding processes in the foregoing method embodiments, which are not repeated here.

FIG. 8 shows a block diagram of exemplary hardware architecture of a computing device capable of implementing a pod deployment method and apparatus according to an embodiment of the present application.

As shown in FIG. 8, a computing device 800 includes an input device 801, an input interface 802, a central processing unit 803, a storage 804, an output interface 805, and an output device 806. The input interface 802, the central processing unit 803, the storage 804, and the output interface 805 are connected to each other via a bus 807, and the input device 801 and the output device 806 are connected to the bus 807 via the input interface 802 and the output interface 805, respectively, and further connected to other components of the computing device 800.

The input device 801 receives input information from the outside, and transmits the input information to the central processing unit 803 through the input interface 802. The central processing unit 803 processes the input information based on computer-executable instructions stored in the storage 804 to generate output information, stores the output information temporarily or permanently on the storage 804, and then transmits the output information to the output device 806 through the output interface 805. The output device 806 outputs the output information outside of the computing device 800 for use by a user.

In an embodiment, the computing device shown in FIG. 8 may be implemented as an electronic device including: a storage configured to store a program; and a processor configured to execute the program stored in the storage to perform the pod deployment method described in any of the above embodiments.

In an embodiment, the computing device shown in FIG. 8 may be implemented as a pod deployment system, including: a storage configured to store a program; and a processor configured to execute the program stored in the storage to perform the pod deployment method described in any of the above embodiments.

An embodiment of the present application further provides a readable storage medium having a computer program stored thereon which, when executed by a processor, causes any pod deployment method described in the embodiments of the present application to be implemented.

The above are merely exemplary embodiments of the present application and not intended to limit the scope of the present application. In general, the various embodiments of the present application may be implemented in hardware or special purpose circuits, software, logic or any combination thereof. For example, some aspects may be implemented in hardware, while other aspects may be implemented in firmware or software which may be executed by a controller, a microprocessor or any other computing device, although the present application is not limited thereto.

Embodiments of the present application may be implemented by a processor executing computer program instructions, for example, in a processor entity, or by hardware, or by a combination of software and hardware. The computer program instructions may be assembler instructions, instruction set architecture (ISA) instructions, machine instructions, machine-related instructions, microcode, firmware instructions, state setting data, or source or object codes written in any combination of one or more programming languages.

The block diagrams of any logic flow in the figures of the present application may represent program operations, or may represent interconnected logic circuits, modules, and functions, or may represent a combination of program operations and logic circuits, modules, and functions. The computer program may be stored on a storage. The storage may be of any type suitable to the local technical environment and may be implemented in any suitable data storage technology, such as but not limited to, read only memories (ROMs), random access memories (RAMs), optical storage devices or systems (digital versatile discs (DVDs), compact discs (CDs)), etc. The computer-readable medium may include a non-transitory storage medium. The processor may be of any type suitable to the local technical environment, such as but not limited to, general purpose computers, dedicated computers, microprocessors, digital signal processors (DSPs), application specific integrated circuits (ASICs), field programmable gate arrays (FGPAs), and processors based on multi-core processor architecture.

The foregoing has provided by way of exemplary and non-limiting examples a detailed description of exemplary embodiments of the present application. Various modifications and adaptations to the foregoing embodiments may become apparent to those skilled in the art in view of the accompanying drawings and the appended claims, without departing from the scope of the present disclosure. Accordingly, the proper scope of the present disclosure is to be determined according to the claims.

## Claims

1. A pod deployment method, comprising:
acquiring label information of pods to be processed in a Kubernetes platform;
determining scheduling priorities of the pods to be processed respectively based on the label information of the pods to be processed; and
scheduling the pods to be processed based on the scheduling priorities of the pods to be processed.

2. The method according to claim 1, wherein the label information of each pod to be processed comprises a preset number, wherein a smaller preset number of the pod to be processed corresponds to a higher scheduling priority of the pod to be processed.

3. The method according to claim 1, wherein the label information of each pod to be processed is information determined based on custom configuration information, the label information is related to a pod class, and different classes of pods to be processed correspond to different scheduling priorities; and
determining scheduling priorities of the pods to be processed respectively based on the label information of the pods to be processed comprises:
determining scheduling priorities of the pods to be processed respectively based on classes of the pods to be processed.

4. The method according to claim 3, wherein the classes of the pods to be processed comprise: a foundation class, a business class, and a super class;
wherein a foundation class pod has a higher scheduling priority than a business class pod, and a business class pod has a higher scheduling priority than a super class pod.

5. The method according to claim 4, wherein before determining scheduling priorities of the pods to be processed respectively based on classes of the pods to be processed, the method further comprises:
acquiring the custom configuration information; and
under the condition of determining that the custom configuration information does not contain a class of a pod to be processed, setting the class of the pod to be processed to the foundation class.

6. The method according to any one of claims 1 to 5, wherein before determining scheduling priorities of the pods to be processed respectively based on the label information of the pods to be processed, the method further comprises:
acquiring, in response to a deployment request instruction, deployment requirement information in the deployment request instruction; and
screening, according to the deployment requirement information, pods to be processed from the Kubernetes platform to obtain a plurality of pods to be processed, and acquiring the label information of the plurality of pods to be processed.

7. The method according to any one of claims 1 to 5, wherein scheduling the pods to be processed based on the scheduling priorities of the pods to be processed comprises:
based on the scheduling priorities of the pods to be processed, inserting each pod to be processed into a tail of a queue; and
repeatedly extracting a pod to be processed from a head of the queue, and deploying the pod to be processed on a target deployment node until there is no pod to be processed in the queue;
wherein a higher scheduling priority of the pod to be processed indicates a closer position of the pod to be processed to the head of the queue.

8. The method according to claim 7, wherein before deploying the pod to be processed on the target deployment node, the method further comprises:
stopping the processing of the pods to be processed under the condition of determining that the target deployment node is unable to be acquired.

9. An electronic device, comprising:
one or more processors; and
a storage having one or more programs stored thereon which, when executed by the one or more processors, cause the one or more processors to implement the pod deployment method according to any one of claims 1 to 8.

10. A readable storage medium, wherein the readable storage medium has a computer program stored thereon which, when executed by a processor, causes the pod deployment method according to any one of claims 1 to 8 to be implemented.
